# EUROPEAN PATENT SPECIFICATION

(11) **EP 1 528 090 B1**
(45) Date of publication and mention of the grant of the patent: **11.07.2007**
(21) Application number: 03766647.6
(22) Date of filing: 28.07.2003
(51) Int. Cl.: C09D 163/00, C09D 5/03, H01F 27/32, H02K 3/30

(54) **EPOXY RESIN POWDER COATING MATERIAL**
EPOXIDHARZPULVERLACKMATERIAL
MATERIAU DE REVETEMENT EN POUDRE DE RESINE EPOXYDIQUE

(30) Priority: 05.08.2002 JP 2002227814
(43) Date of publication of application: 04.05.2005
(73) Proprietor: Nippon Pelnox Corporation, Hadano-shi, Kanagawa 257-0031 (JP)
(72) Inventor: KOMIYAMA, Hirofumi c/o Nippon Pelnox Corporation, Minamiashigara-shi, Kanagawa 250-0113 (JP)
(74) Representative: Cresswell, Thomas Anthony
(86) International application number: PCT/JP2003/009540
(87) International publication number: WO 2004/013239

(56) References cited:
- EP-A2- 0 299 420
- WO-A-86/01216
- JP-A- 10 130 542
- JP-A- 11 092 628
- JP-A- 50 040 629
- JP-A- 54 152 031
- JP-A- 62 174 280
- US-A- 5 206 313
- US-A- 5 574 112
- DATABASE WPI Section Ch, Week 197447 Derwent Publications Ltd., London, GB; Class A21, AN 1974-81455V XP002373488 & JP 49 032998 A (ASAHI ELEC IND CO) 26 March 1974 (1974-03-26)

## Description

### Technical Field

The present invention relates to an epoxy resin powder coating. More specifically, the present invention relates to an epoxy resin powder coating which is used for coating electrical parts such as coils of motors (a starter motor of an engine and other motors) and generators of vehicles, ships or aircrafts and is excellent in heat resistance and cracking resistance.

### Background Art

It is known that it has heretofore been practiced to protect an electrical part such as a coil of a starter motor of a vehicle at high temperatures by use of an epoxy resin powder coating so as to fix the coil. The powder coating is applied to the coil and then impregnated and cured under heating. Thereafter, the coil is placed in a mold and press-molded so as to deform the external shape of the coil and then pressed into a hollow portion of a magnetic material.

As a flexible resin used for such an application, vinyl chloride sol is used. Further, as an epoxy resin powder coating having flexibility, (1) an epoxy-polyester hybrid type powder coating (JP-A 11-152444) (the term "JP-A" as used herein means an "unexamined published Japanese patent application"), (2) an epoxy resin powder coating using a phenol-based curing agent (JP-A 61-012762), and (3) an epoxy resin powder coating using a thermoplastic resin such as EVA as a stress reliever (JP-A 10-130542) are known.

However, all of the above powder coatings have a problem that when an article coated with the powder coating is press-molded after the applied coating is cured, the coating film is liable to be peeled off or have cracks.

### Disclosure of the Invention

An object of the present invention is to provide an epoxy resin powder coating which has neither peeling of a film nor the occurrence of cracks even when an article coated with the coating is deformed after the coating is cured and which is excellent in heat resistance and cracking resistance.

Other objects and advantages of the present invention will become apparent from the following description.

According to the present invention, the above object and advantage of the present invention are achieved by an epoxy resin powder coating which comprises an epoxy resin, a curing agent, a curing accelerator and a polyol having a melting point of 40 to 110°C, wherein the polyol is at least one selected from a polyether polyol, a polyester polyol, a polycarbonate polyol, an acryl polyol and a polysiloxane polyol.

### Preferred Embodiments of the Invention

The epoxy resin used in the present invention may be any conventionally known epoxy resin having at least two epoxy groups in a molecule. Illustrative examples of such an epoxy resin include a bisphenol A type epoxy resin, a halogenated bisphenol A type epoxy resin, a bisphenol F type epoxy resin, a phenol novolak type epoxy resin, a cresol novolak type epoxy resin, a halogenated phenol novolak type epoxy resin, a biphenyl type epoxy resin, a resorcin type epoxy resin, a tetrahydrophenylethane type epoxy resin, a polyolefin type epoxy resin, an alicyclic epoxy resin, and a triglycidyl isocyanate. Of these, the bisphenol A type epoxy resin, the bisphenol F type epoxy resin and the phenol novolak type epoxy resin are particularly preferably used. The epoxy resins may be used alone or in admixture of two or more.

The epoxy resin used in the present invention has an epoxy equivalent of preferably 200 to 2,500, more preferably 200 to 2,000, and a softening point of preferably 50 to 150° C, more preferably 70 to 130° C. When the epoxy equivalent is less than 200, the stability of the powder coating at the time of production and storage are liable to be low, while when it is higher than 2,500, a film resulting from curing of the coating hardly has desired corrosion resistance, chemical resistance and other properties. Further, when the softening point is lower than 50° C, the powder coating is liable to have blocking during storage, while when it is higher than 150° C, the heat flowability of the powder coating when it is cured by heating is poor, so that a smooth coating film is difficult to obtain. If at least one epoxy resin has a softening point of 50 to 150°C when two or more epoxy resins are used in admixture, the rest of the epoxy resins may be a liquid with a softening point of lower than 50°C.

Illustrative examples of the curing agent used in the present invention include acid anhydrides, amines, phenols, and amides. Of these, the acid anhydrides are preferably used. Specific examples of the acid anhydrides includes aromatic carboxylic anhydrides such as phthalic anhydride, trimellitic anhydride, pyromellitic anhydride, benzophenone tetracarboxylic anhydride, ethylene glycol trimellitic anhydride, biphenyl tetracarboxylic anhydride and glycerol tristrimellitic anhydride; aliphatic carboxylic anhydrides such as azelaic anhydride, sebacic anhydride, dodecanedioic anhydride, dodecenylsuccinic anhydride, a polyazelaic anhydride, a polysebacic anhydride, a polydodecanedioic anhydride and a polyeicosadioic anhydride; and alicyclic carboxylic anhydrides such as methyl nadic anhydride, tetrahydrophthalic anhydride, hexahydrophthalic anhydride, nadic anhydride, hetic anhydride, hymic anhydride, 5-(2,5-dioxotetrahydrofuryl)-3-methyl-3-cyclohexene-1,2-dicarboxylic anhydride, a trialkyltetrahydrophthalic anhydride-maleic anhydride adduct, and chlorendic acid. Of these acid anhydrides, polyacid polyanhydrides such as the polyazelaic anhydride, polysebacic anhydride, polydodecanedioic anhydride and polyeicosadioic anhydride and the above aromatic carboxylic anhydrides are particularly preferably used.

The amount of the curing agent to be used is preferably within a range of 0.2 to 1.2, more preferably 0.3 to 0.9, in terms of the equivalent ratio of the curing agent to the epoxy groups of the epoxy resin. The above curing agents may be used alone or in admixture of two or more. When the amount of the above curing agent is smaller than 0.2, it is liable to cause deterioration in the adhesive force of the applied and cured film, while when it is larger than 1.2, the melt viscosity of the epoxy resin powder coating is liable to increase at the time of coating or the epoxy resin powder coating is liable to foam along with a sudden curing reaction, resulting in poor impregnatability thereof against an object to be coated.

As the curing accelerator used in the present invention, conventionally known accelerators which have been used for epoxy resins can be used. Specific examples of the curing accelerators include tertiary amines such as triethylamine, N,N-dimethylbenzylamine, 2,4,6-tris(dimethylaminomethyl)phenol and N,N-dimethylaniline; imidazole compounds such as 2-methylimidazole and 2-phenylimidazole; salts such as a triazine salt, cyanoethyl salt and cyanoethyl trimellitate of an imidazole compound; metal-based compounds such as zinc acetate and sodium acetate; quaternary ammonium salts such as tetrammonium bromide; amide compounds; peroxides; azo compounds; cyanate compounds; isocyanate compounds; and organophosphorus compounds. Of these, the organophosphorus compounds are preferably used. These curing accelerators are added in an amount of preferably 0.1 to 5 parts by weight, more preferably 0.5 to 3.5 parts by weight, much more preferably 0.5 to 2.0 parts by weight, based on 100 parts by weight of the epoxy resin.

The polyol to be added to the epoxy resin powder coating of the present invention has a melting point of 40 to 110 °C. A polyol having a melting point of lower than 40 °C is not preferred because the powder coating becomes liable to have blocking during storage. Meanwhile, when the melting point of the polyol is higher than 110 °C, the heat flowability of the powder coating when it is cured by heating is poor, so that a smooth coating film is difficult to be obtained. A polyol having a melting point of 40 to 110 °C has poor compatibility with the epoxy resin and is a material showing thermoplasticity. Therefore, the polyol is advantageously used. That is, it is assumed that this polyol is present in gaps in the skeleton of the epoxy resin of the applied and cured film and serves to alleviate stress when external force is applied to the film, whereby the flexibility of the film is increased. When a phthalic ester based plasticizer or adipic ester based plasticizer which is used as a plasticizer for a thermoplastic resin such as vinyl chloride is added to an epoxy resin composition, the plasticizer bleeds out from a cured product thereof easily, and it is difficult to impart desired flexibility to the cured product. Further, since an organic rubber based flexibility imparting agent such as EVA bleeds out from the cured product depending on its added amount, it is difficult to impart desired flexibility to the cured product of the epoxy resin composition. In addition, when a phenolic curing agent is used, a skeleton formed by bonding between the epoxy resin and the phenolic resin acquires flexibility from the phenolic resin. In this case, it is difficult to adjust the degree of the flexibility.

The polyol having a melting point of 40 to 110°C is at least one selected from a polyether polyol, a polyester polyol, a polycarbonate polyol, an acryl polyol, and a polysiloxane polyol, all of which have a melting point of 40 to 110°C. Of these, a polyether polyol and a polyester polyol which have a weight average molecular weight of 1,000 to 30,000 are preferably used. Further, a polyether polyol and a polyester polyol which have a weight average molecular weight of 1,500 to 20,000, particularly the polyether polyol, are more preferably used. As the polyether polyol, a homopolymer or copolymer of an alkylene glycol (such as methylene glycol, ethylene glycol, propylene glycol or butylene glycol) which has a weight average molecular weight of 3,000 to 10,000 in particular is more preferably used. As the homopolymer, a polyethylene glycol having a weight average molecular weight of 3,000 to 10,000 is particularly preferably used. Further, as the copolymer, a polyethylene glycol-polypropylene glycol copolymer having a weight average molecular weight of 3,000 to 10,000 is particularly preferably used. A polypropylene glycol is not suitable for sole use because it has a melting point of lower than 40 °C. The content of the polypropylene glycol in the polyethylene glycol-polypropylene glycol copolymer is preferably 50 wt% or lower.

The polyol is used in an amount of preferably 10 to 60 parts by weight, more preferably 15 to 50 parts by weight, much more preferably 20 to 40 parts by weight, based on 100 parts by weight of the epoxy resin.

To the powder coating of the present invention, an inorganic or organic filler may be added as required. Illustrative examples of the inorganic filler include silica, silicon carbide, silicon nitride, boron nitride, calcium carbonate, magnesium carbonate, barium sulfate, calcium sulfate, mica, talc, clay, aluminum oxide, magnesium oxide, zirconium oxide, aluminum hydroxide, magnesium hydroxide, calcium silicate, aluminum silicate, aluminum lithium silicate, zirconium silicate, barium titanate, glass fibers, carbon fibers, molybdenum disulfide, and asbestos. Of these, silica, calcium carbonate, aluminum oxide, aluminum hydroxide and calcium silicate are preferred, and calcium carbonate is more preferred. These fillers may be used alone or in admixture of two or more. The inorganic fillers may also be used after surface-treated with a coupling agent. The inorganic filler is used in an amount of preferably 10 to 70 wt%, more preferably 15 to 55 wt%, much more preferably 20 to 45 wt%, based on the powder coating.

In addition to the above fillers, other additives such as a coloring agent, a coupling agent, a leveling agent and a lubricant may also be added to the powder coating of the present invention as required according to purpose. Illustrative examples of the coloring agent include inorganic pigments such as phthalocyanine, azo, disazo, quinacridone, anthraquinone, flavantrone, perynone, perylene, dioxazine, condensed azo, azomethine or methine-based organic pigments, titanium oxide, lead sulfate, zinc oxide, chrome yellow, zinc yellow, chrome vermillion, red iron oxide, cobalt violet, Prussian blue, ultramarine blue, carbon black, chrome green, chromium oxide, and cobalt green.

Illustrative examples of the coupling agent include silane based coupling agents such as
3-glycidoxypropyltrimethoxysilane,
3-glycidoxypropylmethyldimethoxysilane,
2-(3,4-epoxycyclohexyl)ethyltrimethoxysilane,
N-(2-aminoethyl)3-aminopropylmethyldimethoxysilane,
N-(2-aminoethyl)3-aminopropylmethyltrimethoxysilane,
3-aminopropyltriethoxysilane,
3-mercaptopropyltrimethoxysilane, vinyl trimethoxysilane,
N-(2-(vinylbenzylamino)ethyl)3-aminopropyltrimethoxysilane hydrochloride,
3-methacryloxypropyltrimethoxysilane,
3-chloropropylmethyldimethoxysilane and
3-chloropropyltrimethoxysilane; titanium based coupling agents such as isopropyl(N-ethylaminoethylamino)titanate, isopropyl triisostearoyl titanate, titanium
di(dioctylpyrophosphate)oxyacetate, tetraisopropyl
di(dioctylphosphite)titanate and
neoalkoxytri(p-N-(β-aminoethyl)aminophenyl)titanate; and zirconium or aluminum based coupling agents such as Zr-acetyl acetonate, Zr-methacrylate, Zr-propionate, neoalkoxy
zirconate, neoalkoxytrisneodecanoyl zirconate,
neoalkoxytris(dodecanoyl)benzenesulfonyl zirconate,
neoalkoxytris(ethylenediaminoethyl)zirconate,
neoalkoxytris(m-aminophenyl)zirconate, ammonium zirconium carbonate, Al-acetyl acetonate, Al-methacrylate and Al-propionate. Of these, the silane based coupling agents and the titanium based coupling agents are preferred.

Illustrative examples of the leveling agent include oligomers with a molecular weight of 4,000 to 12,000 which comprise acrylates such as ethyl acrylate, butyl acrylate and 2-ethylhexylacrylate, epoxidized soybean fatty acid, epoxidized abiethyl alcohol, hydrogenated castor oil, and a titanium based coupling agent. Illustrative examples of the lubricant include hydrocarbon based lubricants such as paraffin wax, microwax, and polyethylene wax; higher fatty acid based lubricants such as lauric acid, myristic acid, palmitic acid, stearic acid, arachidic acid, and behenic acid; higher fatty acid amide based lubricants such as stearyl amide, palmityl amide, oleyl amide, methylenebisstearoamide, and ethylenebisstearoamide; higher fatty acid ester based lubricants such as hardened castor oil, butyl stearate, ethylene glycol monostearate, pentaerythritol (mono-, di-, tri- or tetra-) stearate; alcohol based lubricants such as cetyl alcohol, stearyl alcohol, polyethylene glycol, and polyglycerol; metal soaps which are metal (such as magnesium, calcium, cadmium, barium, zinc or lead) salts of lauric acid, myristic acid, palmitic acid, stearic acid, arachidic acid, behenic acid, recinoleic acid, naphthenic acid and the like; and natural waxes such as carnauba wax, candelilla wax, bees wax, and montan wax.

The epoxy resin powder coating of the present invention can be produced by a melt blend method, a dry blend method or other general methods. For example, in the dry blend method, the above epoxy resin, curing agent, curing accelerator and polyol and, as required, other components such as a filler, a coupling agent, a coloring agent, a leveling agent and a lubricant are dry-blended by use of a Henschel mixer or other device and then melt-blended by means of a kneader, extruder or other device. Then, the mixture is solidified by cooling, pulverized and classified, and particles of desired sizes are collected as the epoxy resin powder coating of the present invention. The particle diameters of the particles of the powder coating are preferably within a range of 5 to 250 µm.

The powder coating of the present invention is applied to the surface of an article to be coated, e.g., a coil for a motor by a variety of coating methods such as a fluidizing dip coating method, a static fluidizing tank method, a static spraying method and a cascading method. When the coating is applied to the coil by use of, e.g., the fluidizing coating method, the coil is preheated to preferably 150 to 200° C, more preferably 160 to 190° C and then immersed in a fluidizing coating tank. Then, the coil is further heated at preferably 140 to 220° C for 10 minutes to 1 hour so as to cure the molten material completely. The thickness of the cured film is 20 µm to 10 mm.

### Examples

Hereinafter, the present invention will be further described with reference to Examples. However, the present invention shall not be limited to these Examples.

### Example 1

50 parts by weight of bisphenol A type epoxy resin ("EPICOAT 1004" , product of Japan Epoxy Resins Co. , Ltd. , epoxy equivalent: 925 g/eq, softening point: 97° C), 7 parts by weight of polyeicosadioic anhydride (hydroxyl group equivalent: 257.5 g/eq), 15 parts by weight of polyethylene glycol ("PEG-6000S", product of Sanyo Chemical Industries Ltd., average molecular weight: 8,300, melting point: 61°C), 0.5 parts by weight of triphenylphosphine, 35 parts by weight of calcium carbonate (average particle diameter: 3 µm), 0.1 parts by weight of silane-based coupling agent ("KBM-303", product of Shin-Etsu Chemical Co., Ltd.) and 3.5 parts by weight of red iron oxide ("TODACOLOR 100ED", product of TODA KOGYO CORPORATION) were crushed and mixed by use of a mixer and then melt-blended by use of a twin-screw kneader. After the obtained mixture was solidified by cooling, the resulting product was crushed and passed through a sieve with openings of 180 µm so as to obtain the epoxy resin powder coating of the present invention.

### (Testing Items)

Methods and criteria for evaluating the properties of an article coated with the epoxy resin powder coating of the present invention are as follows.

### (1) Test for Temperature Cycle Resistance

Epoxy resin powder coatings obtained in Examples and Comparative Examples were applied to strip-shaped copper wires (width: 50 mm, thickness: 1.2 mm, length: 3 m) which had been preheated to 190 °C by a dip coating method, then post-cured at 190° C for 15 minutes, and then immersed in cold water of 25° C so as to be forced into a cooled condition. The thicknesses of the coating films were 800 µm. Then, the wires were wound around metallic cylinders having an external diameter of 180 mm 5 times so as to prepare test pieces. The test pieces were heated rapidly to 125° C, kept at 125° C for 30 minutes, cooled rapidly to -40°C and then kept at -40 °C for 30 minutes. This temperature cycle test was repeated for 24 hours (24 cycles). The occurrences of cracks on the coating films formed on the surfaces of the copper wires were observed visually and evaluated by use of the following symbols wherein ⊚ indicates that temperature cycle resistance was excellent and ○ indicates that temperature cycle resistance was good.
⊚ ... No cracks and no peeling occurred.
○ ... No cracks and no peeling occurred until the 10th cycle but cracks and/or peeling occurred by the 24th cycle.
Δ ··· Cracks and/or peeling occurred before or during the 10th cycle.
× ... Cracks and/or peeling occurred when the wire was wound around the test piece.

### (2) Test for Bending Resistance

In accordance with JIS K5600 5-1, the epoxy resin powder coatings obtained in Examples and Comparative Examples were applied to testing plates (steel plates having a size of 150 mm X 50 mm X 0.3 mm) which had been preheated to 190 °C by a fluidizing coating method, kept at 190 °C for 15 minutes, and then left to cool down so as to form films having a thickness of 200 µm. Using a bending tester described in JIS K5600 and varying the diameter (2 mm, 3 mm, 4 mm, 5 mm, 6 mm, 8 mm, 10 mm) of a spindle, the test piece was bended with the coating film on the outside, and the smallest diameter of the spindle with which no cracks and no peeling were found on the coating film was recorded. The smaller the numerical value of the diameter, the better bending resistance the coating has. Further, those having cracks or peeling at a diameter of the spindle of 10 mm were evaluated as "over 10".

### Comparative Example 1

A powder coating was obtained in the same manner as in Example 1 except that the polyethylene glycol used in Example 1 was not used. Then, the powder coating was applied, cured and tested in the same manner as in Example 1.

### Comparative Example 2

A powder coating was obtained in the same manner as in Example 1 except that 15 parts by weight of ethylene-vinyl acetate copolymer ("SUMITATE RB-11", product of Sumitomo Chemical Co., Ltd., average molecular weight: 20,000) and 0.1 parts by weight of titanate based coupling agent ("KR-46B", product of AJINOMOTO CO., INC.) were used in place of 15 parts by weight of the polyethylene glycol and 0.1 parts by weight of the silane-based coupling agent which had been used in Example 1. Then, the powder coating was applied, cured and tested in the same manner as in Example 1.

### Comparative Example 3

A powder coating was obtained in the same manner as in Example 1 except that the polyethylene glycol and filler used in Example 1 were not used and that 10 parts by weight of phenol resin (hydroxyl group equivalent: 219 g/eq, softening point: 80°C) and 1 part by weight of curing accelerator, i.e., imidazole based azine derivative ("2MZ-A", product of Shikoku Corporation) were used in place of 7 parts by weight of the polyeicosadioic anhydride as a curing agent and 0.5 parts by weight of triphenylphosphine as a curing accelerator which had been used in Example 1. Then, the powder coating was applied, cured and tested in the same manner as in Example 1.

### Examples 2 to 4

Epoxy resin powder coatings were obtained in the same manner as in Example 1 except that in Example 2, 50 parts by weight of bisphenol F type epoxy resin ("EPOTOTO YDF-2004", product of TOTO KASEI CO., LTD., epoxy equivalent: 950 g/eq, softening point: 65° C) was used in place of 50 parts by weight of the bisphenol A type epoxy resin used in Example 1 and, in Example 3, 50 parts by weight of o-cresol novolak type epoxy resin ("EPICRON N-690" , product of DAINIPPON INK AND CHEMICALS, INCORPORATED., epoxy equivalent: 215 g/eq, softening point: 93° C) was used in place of 50 parts by weight of the bisphenol A type epoxy resin used in Example 1 and 30 parts by weight of polyeicosadioic anhydride was used. The coatings were then applied, cured and tested in the same manner as in Example 1.

Further, an epoxy resin powder coating was obtained in the same manner as in Example 1 except that in Example 4, 13 parts by weight of polyethylene glycol-polypropylene glycol copolymer ("PE-128", product of Sanyo Chemical Industries Ltd., average molecular weight: 7,000, structure:
PEG(2,000)-PPG(3,000)-PEG(2,000), melting point: 63 °C) and 0.1 parts by weight of titanate based coupling agent ("KR-46B", product of AJINOMOTO CO., INC.) were used in place of 15 parts by weight of the polyethylene glycol and 0.1 parts by weight of the silane-based coupling agent which had been used in Example 1. Then, the powder coating was applied, cured and tested in the same manner as in Example 1.

### Example 5

Using materials shown in Table 1, an epoxy resin powder coating was obtained in the same manner as in Example 1. Then, the powder coating was applied, cured and tested in the same manner as in Example 1.

Materials of the epoxy resin powder coatings used in Examples 1 to 5 and Comparative Examples 1 to 3, mixing ratios thereof, and the properties of articles coated with the epoxy resin powder coatings are shown in Table 1. The temperature cycle resistances of articles coated with Examples 1 to 5 are evaluated as "⊚" (excellent) or "○" (good) and are therefore superior to those coated with Comparative Examples which are evaluated as "×". In addition, the bending resistances of Examples 1 to 5 are all "2 mm" which is superior to those of Comparative Examples 1 to 3 which are "5 mm or over 10 mm".

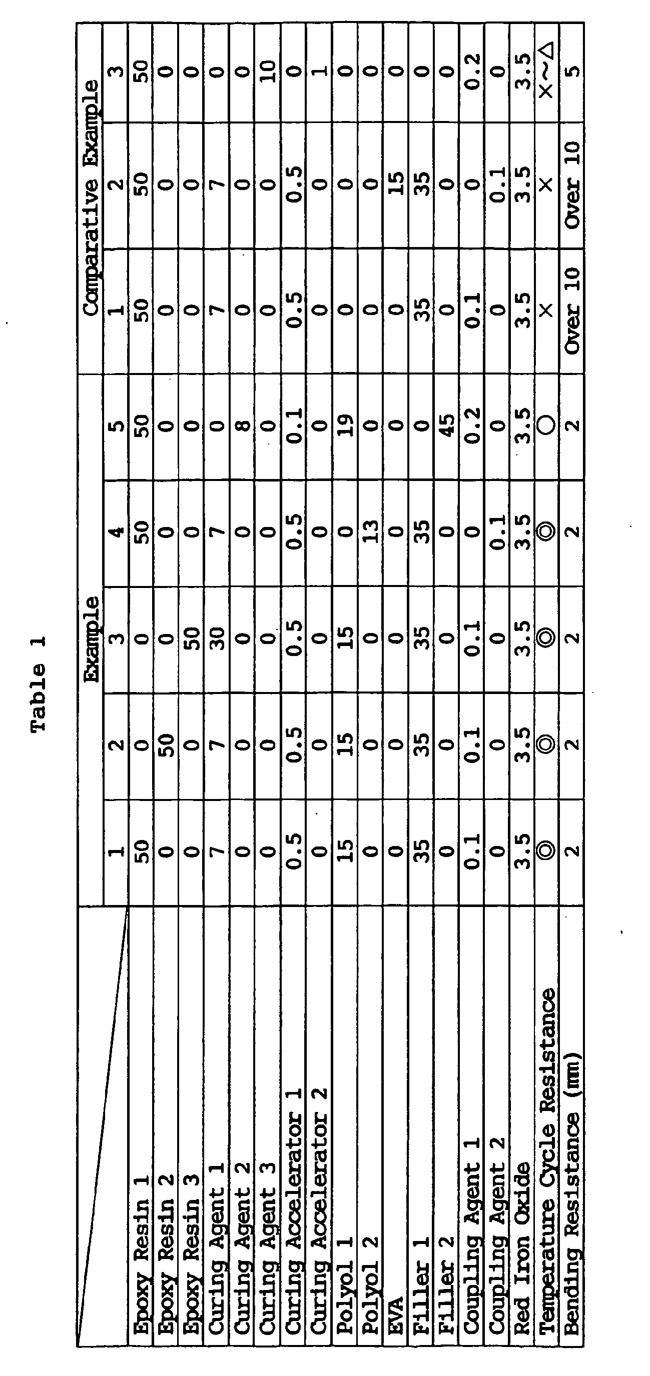

Epoxy Resin 1: bisphenol A type epoxy resin ("EPICOAT 1004", product of Japan Epoxy Resins Co., Ltd., epoxy equivalent: 925 g/eq, softening point: 97°C)
Epoxy Resin 2: bisphenol F type epoxy resin ("EPOTOTO YDF-2004" , product of TOTO KASEI CO., LTD., epoxy equivalent: 950 g/eq, softening point: 65° C)
Epoxy Resin 3: o-cresol novolak type epoxy resin ("EPICRON N-690", product of DAINIPPON INK AND CHEMICALS, INCORPORATED., epoxy equivalent: 215 g/eq, softening point: 93°C)
Curing Agent 1: polyeicosadioic anhydride (hydroxyl group equivalent: 257.5 g/eq)
Curing Agent 2: benzophenone tetracarboxylic anhydride (hydroxyl group equivalent: 161 g/eq)
Curing Agent 3: phenol resin (hydroxyl group equivalent: 219 g/eq, softening point: 80°C)
Curing Accelerator 1: triphenylphosphine
Curing Accelerator 2: imidazole based azine derivative ("2MZ-A", product of Shikoku Corporation)
Filler 1: calcium carbonate (average particle diameter: 3 µm)
Filler 2: spherical silica ("FB-74", product of DENKI KAGAKU KOGYO KABUSHIKI KAISHA CO., LTD., average particle diameter: 15 µm)
Polyol 1: polyethylene glycol ("PEG-6000S", product of Sanyo Chemical Industries Ltd., average molecular weight: 8,300, melting point: 61°C)
Polyol 2: polyethylene glycol-polypropylene glycol copolymer ("PE-128", product of Sanyo Chemical Industries Ltd., average molecular weight: 7,000, melting point: 63 °C)
EVA: ethylene-vinyl acetate copolymer ("SUMITATE RB-11", product of Sumitomo Chemical Co., Ltd., average molecular weight: 20,000)
Coupling Agent 1: silane-based coupling agent ("KBM-303", product of Shin-Etsu Chemical Co., Ltd.)
Coupling Agent 2: titanate-based coupling agent ("KR-46B", product of AJINOMOTO CO., INC.)

It is understood from the above description that by use of the epoxy resin powder coating of the present invention which contains an epoxy resin, a curing agent, a curing accelerator and a polyol having a melting point of 40 to 110°C, wherein the polyol is at least one selected from a polyether polyol, a polyester polyol, a polycarbonate polyol, an acryl polyol and a polysiloxane polyol, as essential components, a fixing material with which a cured coating film undergoes neither peeling nor cracking when an article covered with the cured film is bended and which is excellent in fixing properties can be obtained. Thus, since the powder coating of the present invention satisfies heat resistance, cracking resistance, heat cycle resistance and impregnatability at the same time, it is useful as a powder coating for electrical parts such as coils of motors and generators, e.g. , a field coil of a starter motor of a vehicle.

## Claims

1. An epoxy resin powder coating comprising an epoxy resin, a curing agent, a curing accelerator and a polyol having a melting point of 40 to 110°C, wherein the polyol is at least one selected from the group consisting of a polyether polyol, a polyester polyol, a polycarbonate polyol, an acryl polyol and a polysiloxane polyol.

2. The coating of claim 1, wherein the polyol is contained in an amount of 10 to 60 parts by weight based on 100 parts by weight of the epoxy resin.

3. The coating of claim 1, wherein the polyol is a polyether polyol or polyester polyol and has a weight average molecular weight of 1,000 to 30,000.

4. The coating of claim 1, wherein the polyol is a polyether polyol having a weight average molecular weight of 1,500 to 20,000.

5. The coating of claim 1, wherein the polyol is a homopolymer or copolymer of an alkylene glycol, said homopolymer and copolymer having a weight average molecular weight of 3,000 to 10,000.

6. The coating of claim 1, wherein the polyol is a polyethylene glycol having a weight average molecular weight of 3,000 to 10,000 or a copolymer of a polyethylene glycol and a polypropylene glycol, the copolymer having a weight average molecular weight of 3,000 to 10,000.

7. The coating of any one of claims 1 to 6, wherein the curing agent is an acid anhydride.

8. The coating of any one of claims 1 to 6, wherein the curing agent is a polyeicosadioic anhydride, benzophenonetetracarboxylic anhydride or trimellitic anhydride.

9. An article coated with the coating of any one of claims 1 to 8.

## Patentansprüche

1. Epoxyharz-Pulverbeschichtung, umfassend ein Epoxyharz, ein Härtungsmittel, einen Härtungsbeschleuniger und ein Polyol mit einem Schmelzpunkt von 40 bis 110 °C, wobei es sich bei dem Polyol um mindestens ein Produkt handelt, das aus der Gruppe ausgewählt ist, die aus einem Polyetherpolyol, einem Polyesterpolyol, einem Polycarbonatpolyol, einem Acrylpolyol und einem Polysiloxanpolyol besteht.

2. Beschichtung nach Anspruch 1, wobei das Polyol in einer Menge von 10 bis 60 Gewichtsteilen, bezogen auf 100 Gewichtsteile des Epoxyharzes enthalten ist.

3. Beschichtung nach Anspruch 1, wobei es sich bei dem Polyol um ein Polyetherpolyol oder ein Polyesterpolyol handelt und das Polyol ein Gewichtsmittel des Molekulargewichts von 1000 bis 30000 aufweist.

4. Beschichtung nach Anspruch 1, wobei es sich beim Polyol um ein Polyetherpolyol mit einem Gewichtsmittel des Molekulargewichts von 1500 bis 20000 handelt.

5. Beschichtung nach Anspruch 1, wobei es sich beim Polyol um ein Homopolymeres oder Copolymeres eines Alkylenglykols handelt, wobei das Homopolymere und Copolymere ein Gewichtsmittel des Molekulargewichts von 3000 bis 10000 aufweisen.

6. Beschichtung nach Anspruch 1, wobei es sich bei dem Polyol um ein Polyethylenglykol mit einem Gewichtsmittel des Molekulargewichts von 3000 bis 10000 oder um ein Copolymeres eines Polyethylenglykols und eines Polypropylenglykols handelt, wobei das Copolymere ein Gewichtsmittel des Molekulargewichts von 3000 bis 10000 aufweist.

7. Beschichtung nach einem der Ansprüche 1 bis 6, wobei es sich beim Härtungsmittel um ein Säureanhydrid handelt.

8. Beschichtung nach einem der Ansprüche 1 bis 6, wobei es sich beim Härtungsmittel um ein Polyeicosadisaureanhydrid, ein Benzophenontetracarbonsäureanhydrid oder Trimellitsäureanhydrid handelt,

9. Gegenstand, beschichtet mit der Beschichtung nach einem der Ansprüche 1 bis 8.

## Revendications

1. Revêtement en poudre de résine époxy comprenant une résine époxy, un agent de durcissement, un accélérateur de durcissement et un polyol ayant un point de fusion de 40 à 110 °C, dans lequel le polyol est au moins un choisi dans le groupe comprenant un polyol de polyéther, un polyol de polyester, un polyol de polycarbonate, un polyol acrylique et un polyol de polysiloxane.

2. Revêtement selon la revendication 1, dans lequel le polyol est contenu en une quantité de 10 à 60 parties en poids sur la base de 100 parties en poids de la résine époxy.

3. Revêtement selon la revendication 1, dans lequel le polyol est un polyol de polyéther ou un polyol de polyester et possède une masse moléculaire moyenne en poids de 1 000 à 30 000.

4. Revêtement selon la revendication 1, dans lequel le polyol est un polyol de polyéther possédant une masse moléculaire moyenne en poids de 1 500 à 20 000.

5. Revêtement selon la revendication 1, dans lequel le polyol est un homopolymère ou un copolymère d'un alkylène glycol, lesdits homopolymère et copolymère possédant une masse moléculaire moyenne en poids de 3 000 à 10 000.

6. Revêtement selon la revendication 1, dans lequel le polyol est un polyéthylène glycol ayant une masse moléculaire moyenne en poids de 3 000 à 10 000 ou un copolymère d'un polyéthylène glycol et d'un polypropylène glycol, le copolymère ayant une masse moléculaire moyenne en poids de 3 000 à 10 000.

7. Revêtement selon l'une quelconque des revendications 1 à 6, dans lequel l'agent de durcissement est un anhydride d'acide.

8. Revêtement selon l'une quelconque des revendications 1 à 6, dans lequel l'agent de durcissement est un anhydride polyéicosadioique, anhydride benzophénonetétracarboxylique ou anhydride trimellitique.

9. Article enduit avec le revêtement selon l'une quelconque des revendications 1 à 8.
